# EUROPEAN PATENT SPECIFICATION

(11) **EP 1 652 572 B1**
(45) Date of publication and mention of the grant of the patent: **19.09.2007**
(21) Application number: 04077971.2
(22) Date of filing: 28.10.2004
(51) Int. Cl.: B01D 65/08

(54) **Process for cleaning a submerged filtration membrane, gas flow system for cleaning such membrane and membrane filtration tank comprising a gas flow system**
Prozess zur Reinigung eines Tauchmembranmoduls, Gasleitungssystem zur Reinigung einer solchen Membran und Filtrationstank mit Gasleitungssystem
Procédé pour le nettoyage d'un système à membranes filtrantes immergées, système d'introduction de gaz pour le nettoyage d'une telle membrane et réservoir de filtration comprennant un tel système d'introduction

(43) Date of publication of application: 03.05.2006
(73) Proprietor: DHV Water B.V., NL-3818 EX Amersfoort (NL)
(72) Inventor: Van der Roest, Helle Frans, NL 3828 XJ Hoogland (NL); Lawrence, Darren Paul, NL 3882 LP Putten (NL)
(74) Representative: van Westenbrugge, Andries

(56) References cited:
- US-A1- 2002 139 748
- US-A1- 2003 141 248
- US-B1- 6 280 626
- PATENT ABSTRACTS OF JAPAN vol. 1999, no. 14, 22 December 1999 (1999-12-22) & JP 11 244674 A (KURITA WATER IND LTD), 14 September 1999 (1999-09-14)

## Description

### Field of invention

The invention is related to a process for cleaning a submerged filtration membrane and to a gas flow system for cleaning a submerged filtration membrane. The invention is further related to a membrane filtration tank comprising this gas flow system for cleaning one or more submerged filtration membranes. The invention further relates to a computer program product for performing the process of the invention with the gas flow system.

### Background of invention

Submerged membranes are used for treating a liquid containing solid material to produce a filtered liquid lean in or free from solids and an unfiltered retentate rich in solids. For example, submerged membranes are used to withdraw substantially clean water from wastewater and to withdraw potable water from water from a lake or reservoir. The membranes are generally arranged in modules or units which comprise the membranes and headers attached to the membranes. The modules are immersed in a tank of water containing solids. Usually, a transmembrane pressure is applied across the membrane walls, which causes water to permeate through the membrane surfaces. Solids do not permeate through the membranes and remain in the tank water and can biologically or chemically be treated or drained from the tank.

Fouling and blocking of such filtering membranes by the solids should be controlled. For that purpose, air bubbles are introduced to the tank through aerators mounted below or in the membrane modules and connected by tubes to an air blower. The air bubbles rise to the surface of the tank's content and create an air lift which recirculates the tank contents around the membrane module(s). When the rate of air flow is within an effective range, the rising bubbles and tank water scour and agitate the pores and surface of the membranes and inhibit solids in the tank water from fouling the pores of the membranes. Further, there is also an oxygen transfer from the bubbles to the tank water which in wastewater applications may provide oxygen for the growth of micro-organisms.

A disadvantage of the prior art processes for cleaning submerged filtration membranes, e.g. described in EP0605826 and EP1452493, is that under operation conditions the membranes eventually foul with solids, which decreases operation time of the membranes and decreases the efficiency of the filtration process of the water in the tank. Another disadvantage of the prior art processes for cleaning submerged filtration membranes is that large amounts of air has to be used which, amongst others, complicates the control of biological processes.

Further prior art systems are disclosed in US 2003/141248, US 2002/139748 and US 6280626.

### Summary of the invention

It is an object of the invention to provide a process for cleaning a submerged filtration membrane, to provide a gas flow system for cleaning a submerged filtration membrane, and to provide a membrane filtration tank comprising this gas flow system, wherein the membranes during use are substantially prevented from fouling and wherein during the process less gas has to be used to induce cleaning of the membranes. It is further an object of the invention to provide a computer program product for performing the process of the invention.

In a first aspect of the invention, there is provided a process according to claim 1.

In a second aspect of the invention, there is provided a gas flow system according to claim 5.

In yet a further aspect of the invention there is provided a membrane filtration tank according to claim 8.

In yet a next aspect of the invention, there is provided a computer program product comprising computer executable instructions which, when loaded on a computer which interfaces with a gas flow system according to the invention, provides the combination of computer and gas flow system with the functionality of the process according to the invention.

### Brief description of the drawings

Figures 1a and 1b schematically depict membrane filtration systems according to the prior art.
Figure 2 schematically depicts a tank containing a submerged filtration membrane and a gas flow system according to an embodiment of the invention.
Figures 3a and 3b schematically depict a tank containing a submerged filtration membrane and a gas flow system according to an embodiment of the invention, wherein in the tank a wave is generated on the surface of the liquid in the tank.
Figure 4 schematically depicts a membrane filtration tank containing a gas flow system according to an embodiment of the invention.
Figures 5a-c schematically depict embodiments of a gas-dispersing device.

### Detailed description

In the process for cleaning a submerged filtration membrane according to the invention, (periodically) a wave is generated on the surface of the liquid in the tank. The turbulency generated in the liquid in the tank by this process provides a better protection against fouling of the membrane than state of the art processes. Especially after a period (second period) wherein no flow is provided to the gas-dispersing device and a new flow is provided (in a first period), a jet of water is provided into the liquid, due to the fact that during the second period that no flow is provided the gas-dispersing device takes up water, which spurts away when the flow is provided again.

Submerged filtration membranes are known from the art, e.g. flat plate submerged membranes, hollow fibre submerged membranes, capillary membranes etc., having pore sizes in the order of 0.003-10 µm. Providers of such membranes are e.g. Kubota, Mitshubishi, Norit Membrane Technology, Seghers-Toray, Zenon etc. Such membranes can e.g. be applied in membrane bioreactors (MBR). MBR technology is based on the combination of an activated sludge process and a membrane filtration in one treatment step. The separation of activated sludge and effluent takes place using membranes, where all suspended material is removed from the water. The biological process of MBR is comparable to the conventional activated sludge process, where good treatment results and flexibility is maintained. MBR can be applied in municipal and industrial wastewater purification processes. Hence, the process for cleaning a submerged filtration membrane according to the invention can be applied in a municipal or industrial wastewater purification process. The process for cleaning a submerged filtration membrane according to the invention may however also be used for the production of drinking water, e.g. the liquid to be treated may also be e.g. water from a lake or a reservoir. The tank wherein the process of the invention can be applied can be any tank, vessel, etc., known to the person skilled in the art for such applications.

The gas-dispersing device for providing a gas in the liquid can be a means as e.g. described in EP0605826 or EP1452493. It can be a gas-dispersing device below at least part of the filtration membrane surface comprising an aerator with apertures or holes between 1 and 20 mm, more preferably holes with a diameter between 5 and 10 mm. Basically, the gas-dispersing device comprises a hollow body like a channel, which may be flat, rectangular, round, etc., comprising a circumferential surface with a number of apertures having diameters between about 1 and 20 mm. The apertures may be distributed over the circumferential surface, but will usually be distributed preferentially on the part of the circumferential surface that, when in use, is directed to the membrane (unit) in the tank. The gas-dispersing device, the aerator, may be a straight or curved channel or tube, it may comprise a number of channels or tubes, but may also have a plate type of structure (having at least one (mutual) first inlet and one (mutual) second inlet). The aerator may comprise branches, e.g. a central channel with a number of branches, or with e.g. a kind of Christmas tree distribution of branches, wherein each branch may also contain apertures (diameter 1-20 mm). The gas-dispersing device has apertures for providing a gas in the liquid. Gas is provided to the hollow body or channel by the first and/or second inlet, which escapes through the apertures to form gas bubbles in the liquid. What type of gas-dispersing device is used, the term gas-dispersing device herein is used for all above described types of gas-dispersing devices or other gas-dispersing device known to the person skilled in the art.

The gas-dispersing device will usually be placed below at least part of the filtration membrane surface. In an embodiment, the gas-dispersing device is an integral part of the filtration membrane module or unit, as is often the case for commercially available membrane modules. The gas-dispersing device may also be arranged next to the filtration membrane, e.g. at half height of the membrane (unit) or partly next to the filtration membrane, or staggered with respect to the membrane module or unit. The person skilled in the art may choose an appropriate arrangement relative to the membrane(s) or unit(s) comprising membranes. The phrase "gas-dispersing device being arranged below at least part of the filtration membrane surface" is intended to comprise these different arrangements, and comprises those arrangements that when the submerged filtration membrane is in use in a tank with a liquid, it provides a gas flow (bubbles) substantially parallel to at least part of a membrane surface and provides an air lift in the liquid along the surface of a membrane (unit).

Herein, "membrane surface" comprises the surface of the membrane(s) or membrane unit, membrane module or membrane cassette that is directed to the liquid, and which is usually substantially vertical (sometimes with some degree of freedom, e.g. membranes with a small degree of slack). The gas-dispersing device of the present invention has at least two inlets, although more inlets may be present. Filtration membranes may be rectangular. Filtration membranes are usually comprised in units which are rectangular. Herein, the term "membrane" also refers to membrane unit, module or cassette. The gas-dispersing device may also have structure with a longer length than width. In a preferred embodiment, the first inlet and the second inlet are arranged on opposite sides of the gas-dispersing device, especially at the opposite sides in the direction of the length (i.e. at the end sides of the channel, or at the end sides of the main channel of the gas-dispersing device). This does not necessarily imply that the inlets have to be present at the edges; they may also be present close to the edges. In another embodiment, the first and second inlets have a distance of each other, calculated from the centres of the inlets to the gas-dispersing device, of at least about 50-80 % of the length of the gas-dispersing device. Preferably, this distance is at least about 80-90% of the length. An advantage of the invention is that state of the art gas-dispersing devices may be used, or, whereby, when necessary, only a second inlet and/or a second tube (connecting the second inlet and a gas source like a blower) may have to be provided. When the gas-dispersing device is purged with gas (v.i.), the second (or first) inlet may also be used as outlet.

The gas-dispersing device receives gas from a gas source. This source may be a known source, providing air, nitrogen and/or other, preferably, inert gasses, or combinations thereof. Preferably, air is used. The gas is provided to the first inlet, or to the second inlet or to both first and second inlets. The gas is provided to the inlet(s) in a pulsed way, i.e. during a first period the gas flow is provided and during a second period no gas flow is provided to the gas-dispersing device for providing the gas below at least part of the filtration membrane surface. For example, the first period is about 1-300 seconds, preferably about 5-60 seconds, and the second period is about 1-600 seconds, preferably about 5-300 seconds. Preferably, the first and second periods are repeated a number of times, e.g. up to about 500 cycles or pulses, e.g. about 2-100 cycles. In yet a further embodiment, there is provided a process wherein the second period is in the order of the time wherein bubbles generated by the gas-dispersing device travel to the surface of the liquid along the filtration membrane. In this way, the bubbles generated during the first period are efficiently used and aeration gas is not excessively used.

The invention provides a process comprising providing the pulsed gas flow to the first inlet during a first interval and providing the pulsed gas flow to the second inlet during a second interval. For example, this may be a process wherein the first period and the second period are repeated a number of times during the first interval when providing the gas flow to the first inlet and wherein the first and second period are repeated a number of times during the second interval when providing the gas flow to the second inlet. Advantageously, due to the repetition of the first and second periods, a wave is formed on the surface of the liquid and turbulency is introduced in the liquid in the tank. This promotes a good distribution of solid material, like e.g. biomass in the liquid in the tank, and decreases the number of dead zones or even avoids formation of such zones where there is no recirculation. For example, the first interval may be up to about 500 cycles or pulses, e.g. 2-100 cycles, providing the gas flow to the first inlet, and the second interval may also be up to about 500 cycles, e.g. about 2-100 cycles providing the gas flow to the second inlet.

The first and the second interval may coincide, either completely or partially, or may completely be separated from each other in time, such that the first and second interval alternate. After each interval, there may be an interval wherein no gas flow is provided. According to a preferred embodiment, there is provided a process wherein after the first interval or after the second interval or after both first and second intervals a third interval is provided wherein no gas flow is provided to the gas-dispersing device. The third interval may be between a few seconds and more than an hour. In an embodiment, the third interval is between about 1 and 600 seconds, preferably between about 5 and 300 seconds. This embodiment may especially provide the advantages of the invention, since during the third interval, liquid may enter the gas-dispersing device, and when the first or second interval starts, a spurt of liquid is provided escaping from the gas-dispersing device, especially through the aperture(s) of the gas-dispersing device close to the first or the second inlet, respectively. In an embodiment, the apertures closest to the first and second inlets, respectively, have a distance of each other, calculated from the centres of the apertures in the gas-dispersing device, of at least about 50-80 % of the length of the gas-dispersing device. Preferably, this distance is at least about 80-90% of the length.

In a further embodiment, a process is provided comprising:
- providing to the first inlet during a first interval up to about 500 cycles or pulses, e.g. up to about 2-100 cycles or pulses, with a first period of about 1-300 seconds, preferably about 5-60 seconds (gas flow pulse) and with a second period of about 1-600 seconds, preferably about 5-300 seconds, thereby providing no gas flow to the second inlet;
- providing no gas flow to the first inlet and providing no gas flow to the second inlet, during an interval (third interval) of between about 1 and 600 seconds, this interval preferably being about 5-300 seconds during membrane filtration;
- providing to the second inlet during a second interval up to about 500 cycles or pulses, e.g. up to about 2-100 cycles or pulses, with a first period of about 1-300 seconds, preferably about 5-60 seconds (gas flow pulse) and with a second period of about 1-600 seconds, preferably about 5-300 seconds, thereby providing no gas flow to the first inlet;
- providing no gas flow to the first inlet and providing no gas flow to the second inlet, during an interval (third interval) of between about 1 and 600 seconds, this interval preferably being about 5-300 seconds during membrane filtration;
- repeating the 4 previous steps.

As mentioned above, the process of the invention provides an embodiment of the process wherein the pulsed gas flow provides a wave on the surface of the liquid in the tank. Preferably, the gas flow is provided in such a way that the wave generated on the surface has an amplitude between about 1-30 cm, e.g. between about 5-20 cm. This is the wave generated on the surface by the spurt of liquid, especially in the first one or more pulses of gas flow in the first interval and/or the first one or more pulses of gas flow of the second interval, respectively. During the first interval, the wave is mainly generated at one side of the filtration membrane, i.e. at the side of the filtration membrane closest to the first inlet, and during the second interval, the wave is mainly generated at the other side of the filtration membrane, i.e. at the side of the filtration membrane closest to the second inlet. In this way, turbulence is introduced in the liquid in the tank, the whole surface of the filtration membrane is effectively cleaned from foul and/or fouling is substantially prevented and formation of concentration gradients of solids in the liquid is diminished or prevented. In a preferred embodiment, the apertures of the gas-dispersing device closest to the first and second inlets, respectively, have a distance of each other, calculated from the centres of the apertures in the gas-dispersing device, of at least about 50-80 % of the length of the membrane unit. Preferably, this distance is at least about 80-90% of this length. The person skilled in the art may adapt the first and second periods, the gas flow, the interval times, etc, such that the desired amplitude of the wave at the surface, turbulence, reduction of foil on the membrane surface, etc. is obtained. Further, the times of the first and second periods, the first, second and third interval may be varied during the process. The amplitude chosen may e.g. depend on the extent of fouling, but also on the tank dimensions, height of liquid in the tank, type of application, etc.

In yet a further embodiment of the invention the pulsed gas flow is provided to the first inlet during a first interval such that about 1-20 waves are provided, and wherein subsequently (or after a third interval) the gas flow is provided to the second inlet during a second interval such that 1-20 waves are provided. This process may be repeated during membrane filtration. In this way, the submerged filtration membrane is effectively protected against fouling and/or fouling takes place in a substantially longer time frame than with state of the art aeration methods.

In yet a next embodiment of the invention there is provided a process wherein a gas flow of 0.01-0.3 Nm3/h/m2, with respect to the area of the membrane, is provided. This gas flow describes the gas flow per hour per area membrane. The gas flow may depend upon the kind of application, e.g. the gas flow may be about 0.02-0.1 for Nm³/h/m² for a drinking-water filtration application and may be about 0.05-0.25 for Nm³/h/m² for a waste-water filtration application. State of the art processes usually have gas flows larger than about 0.4 for Nm³/h/m², or even up to about 0.7 for Nm³/h/m². Hence, the process and gas flow system of the invention provide a further advantage in that less gas has to be used. This does not only provide in an economical respect advantages, it further provides the advantage that biological processes, wherein oxygen is used or on the other hand wherein (too much) oxygen may disturb processes, can better be controlled.

The gas flow system for cleaning a submerged filtration membrane according to the invention can advantageously be used in the process for cleaning a submerged membrane according to the invention. The gas-dispersing device of the gas flow system, e.g. an aerator, is connected to a supply for gas via one tube (first tube) to the first inlet and via another tube (second tube) to the second inlet. In one embodiment there may be more inlets, and the first tube may be connected to one or more inlets, as well as the second tube may be connected to one or more inlets. The number of inlets may depend upon the kind of submerged filtration membrane, its dimension and e.g. the kind of (commercially available) gas-dispersing device or aeration system used. As mentioned above, in an embodiment, there is provided a gas flow system for cleaning a submerged filtration membrane wherein the first inlet and the second inlet are arranged on opposite sides of the gas-dispersing device, i.e. arranged at the end sides of the gas-dispersing device (channel with multitude of apertures for providing gas bubbles in the liquid).

The first tube and the second tube of the gas flow system contain valves. Both tubes contain a valve, such that during a first interval, only gas may be provided (in a pulsed way) by opening and closing the first valve to the first inlet, and during a second interval, only gas may be provided (in a pulsed way) by opening and closing the second valve to the second inlet. Both valves may also be opened and closed at the same time, which may e.g. be done after a third interval of no flow, thereby providing a jet at both sides of the gas-dispersing device (i.e. the first and second interval coincide). When the intervals do not coincide, i.e. one of the valves is closed and the other valve induces gas flow pulses, the jet will be provided at one side of the gas-dispersing device.

The jet will mainly be provided after an interval (third interval) wherein no flow is provided. Hence, the interval is preferably long enough to fill at least partially the gas-dispersing device with liquid. Preferably, the time is long enough to fill the internal volume of the gas-dispersing device for at least about 50-80 vol.%. The jet will mainly be induced by the first pulse(s); after some pulses (alternating the first and second period a few times), the gas-dispersing device will provide bubbles through substantially all apertures. However, when the second period is also long enough to fill at least partially the gas-dispersing device, the jet may also be induced by the subsequent first pulse(s). In commercially available systems for e.g. MBR applications, a time of approximately 5-20 seconds is enough to provide the desired jet of water according to the invention. This time depends upon the internal volume of the gas-dispersing device and also depends upon e.g. the position (depth) of the gas-dispersing device relative to the surface of the contents of the tank. It is not necessary that the gas-dispersing device is completely filled with the liquid of the tank. When the gas-dispersing device is partially filled and the flow of gas is provided again, a sufficient pressure drop may be provided such that a jet is also created.

The term gas supply also comprises a number of supplies.

In yet another embodiment, there is provided a gas flow system according to the invention, further comprising a flush valve, connected with the first tube or with the second tube. This advantageously provides the possibility to flush the gas-dispersing device. For example, by opening the first and third valves and closing the second valve, and providing gas to the gas-dispersing device, a flush is provided. A periodical flush may be comprised in the process of the invention, e.g. when the gas-dispersing device appears to contain (too) much solid material. The solid material and/or sludge will be forced by the gas flow from the gas-dispersing device to the flush valve, thereby cleaning the gas-dispersing device.

According to yet a further aspect of the invention, there is provided a membrane filtration tank for use of one or more submerged filtration membranes, comprising one or more submerged filtration membranes and one or more gas flow systems according to the invention for cleaning the one or more filtration membranes, the gas flow system comprising a gas-dispersing device. The one or more gas-dispersing devices for providing a gas in the liquid may be arranged below at least part of the one or more filtration membranes surfaces.

This aspect of the invention is directed to membrane filtration tanks, like e.g. used in MBR processes, wherein the gas flow system for cleaning a submerged filtration membrane of the invention is used, but wherein the gas flow system comprises a number of gas-dispersing devices. Usually, a membrane filtration tank comprises a number of membrane units, and each unit may be aerated by a gas-dispersing device. Such gas-dispersing device may be integrated in the membrane unit. Further, as mentioned above the first inlet and the second inlet of the gas-dispersing device may be arranged on opposite sides of the gas-dispersing device. In yet a further embodiment, the tube to the one or more first inlets and the tube to the one or more second inlets contain a valve. According to yet a further embodiment, also a flush valve may be provided, the flush valve connected with the tube to the one or more first inlets or the tube to the one or more second inlets.

According to another embodiment of the invention, the membrane filtration tank is comprised in a membrane bio reactor system comprising one or more reactors wherein nitrification takes place and one or more reactors wherein denitrification takes place, and wherein an effluent from these reactors is fed to the membrane filtration tank.

According to yet a next aspect of the invention, there is provided a computer program product comprising computer executable instructions which, when loaded on a computer which interfaces with a gas flow system according to the invention, provides the combination of computer and gas flow system with the functionality of the process according to the invention. The computer is connected to the hardware of the gas supply (or gas supplies), the first valve, the second valve and the third valve (and optionally other valves). This computer program product may provide the functionalities of providing a gas flow during a first period, e.g. by opening the first and/or second valve, providing no gas flow during a second period, e.g. by closing both first and second valves. It provides the functionality of providing a pulsed gas flow during a first interval, e.g. by closing and opening the first valve (and having the second valve closed) and providing a gas flow during a second interval, e.g. by closing and opening the second valve (and having the first valve closed). It may provide the functionality of providing a number of pulses of gas flow during a first interval and providing a number of pulses of gas flow during a second interval, the intervals partly or completely coinciding, or not coinciding, or the intervals being separated in time by a third interval. The computer program may further provide the functionality of providing a specific gas flow to the liquid by the gas supply and to provide a wave on the surface on the liquid in the tank.

Further, the tank may to comprise sensors, e.g. to measure turbulency, concentrations of species in the liquid, pH, temperature, gas flow in the tubes, bubble speed, fouling on membranes, wave height, etc. Such sensors may further comprise hardware, which may be interfacing with a computer. The signals of the sensors may be used for the computer program product when loaded on a computer.

Below, some gas flow systems of the prior art described and some embodiments of the invention are described in more detail.

Referring to figure 1a, schematically a membrane filtration system 10 of the prior art is shown (as e.g. provided by Zenon). Membrane filtration system 10, e.g. a MBR system, comprises a tank 25, filled with a liquid 30 (comprising sludge). The tank contains a membrane or membrane unit, membrane cassette or membrane module 20. Only one such membrane unit 20 is shown, but tank 25 may contain more membrane units 20. Tank 25 further comprises a gas-dispersing device 35, which has an inlet 36, e.g. an aerator, as for example described in EP1452493 or EP0605826. The apertures are not shown in the figure. Aerator 35 is connected to gas supply 40, e.g. a blower (e.g. positive displacement blower, a centrifugal blower, a ventilator blower, compressor blower, as known to the person skilled in the art, e.g. providing gas flows up to 1.000-200.000 m³/h), by tube 50, connecting inlet 36 with an outlet of gas supply 40. Further, a valve 51 may be present. Aerator 35 may be below the surface of membrane unit 20, either integrated in membrane unit 20 or separate from membrane unit 20. Aerator 35 provides a gas (from gas supply 40), thereby providing bubbles 37, which flow substantially parallel to the surface of the membrane(s) (i.e. membrane unit 20). The bubbles clean the membrane surface, but state of the art applications still show substantial foiling of membrane unit 20.

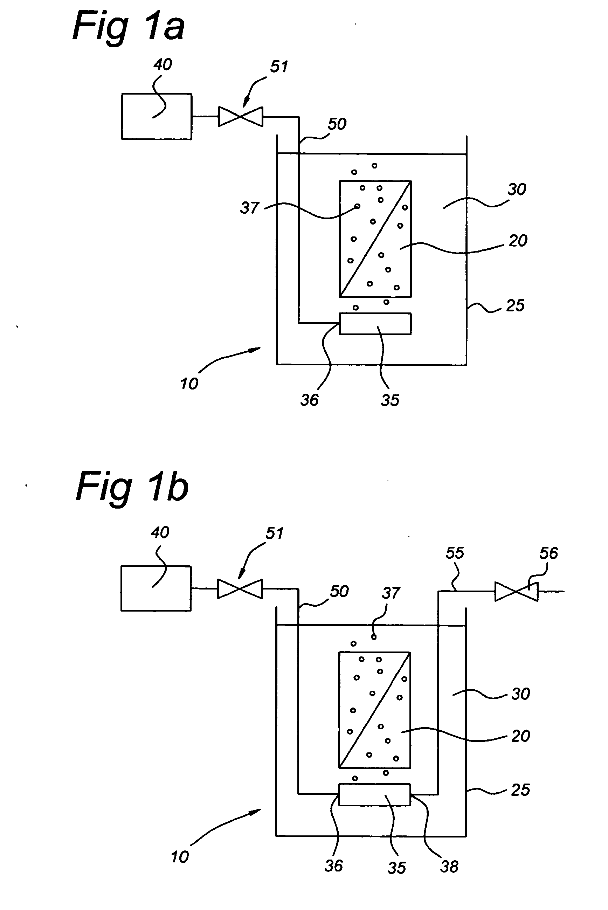

Another membrane filtration system 10 of the prior art is shown in figure 1b (as e.g. provided by Kubota). The gas-dispersing device 35 further comprises an outlet 38, connected to a tube 55 and a flush valve 56. By opening flush valve 56, e.g. periodically, the gas-dispersing device 35 may be flushed, thereby removing solid material form the gas-dispersing device 35. This membrane filtration system may further be used as the embodiment depicted in figure 1a and described above.

### Embodiment 1

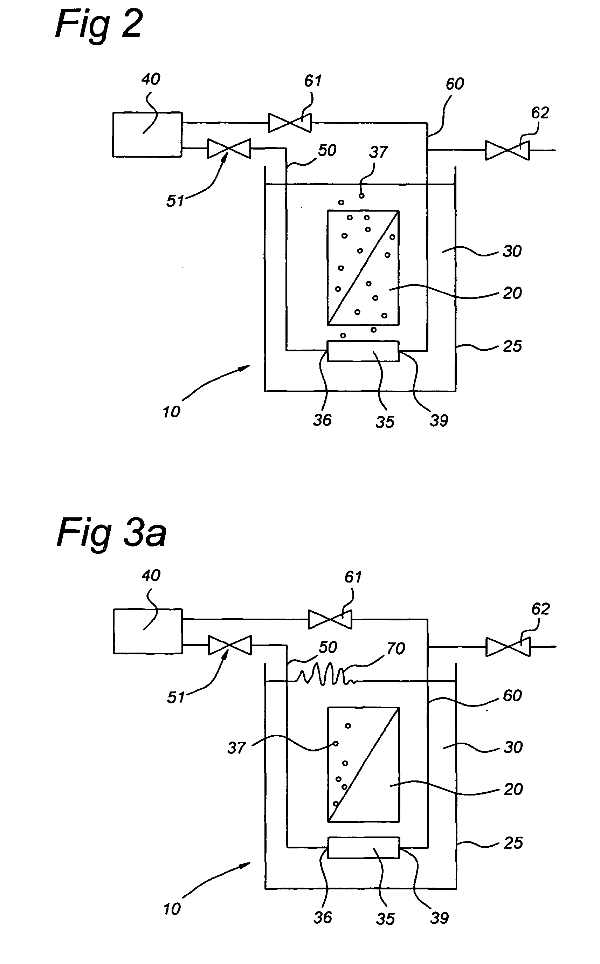

Referring to figure 2, a membrane filtration system 10 according to the invention is schematically shown. For the reference symbols in common with figure 1a is referred to figure 1a. The gas-dispersing device 35 of the gas flow system according to the invention, as depicted schematically in figure 2, comprises in addition to inlet 36, an inlet 39 (second inlet) (which may in a variation on this embodiment also be outlet 38, see figure 1b), which is connected by tube 60 (second tube) to gas supply 40. Further, tube 60 may comprise a valve 61 (second valve). In a variation on this embodiment, there is further provided a flush valve 62, which is in this figure connected to tube 60, but which may also be connected to tube 50 (first tube). There may also be two flush valves present, connected to both tubes 50 and 60, respectively.

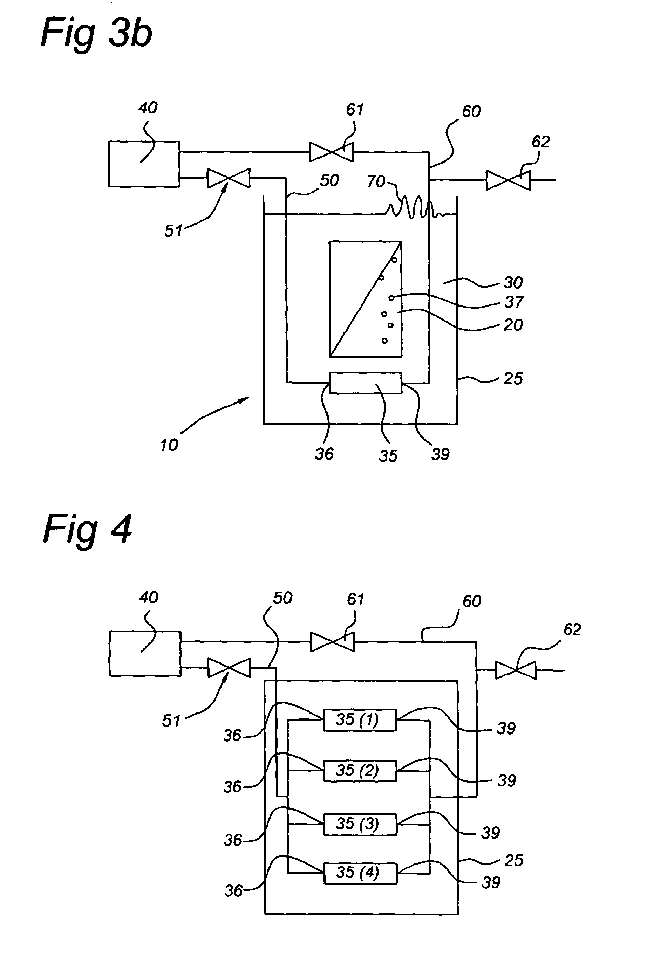

When providing to the first inlet 36 during a first interval up to about 500 cycles or pulses, e.g. 2 cycles or pulses, with a first period of e.g. about 20 seconds (gas flow pulse) and with a second period of about 20 seconds, thereby providing no gas flow to the second inlet, a jet may be provided closest to inlet 36 escaping from the gas-dispersing device 35, thereby providing a wave 70 on the surface of liquid 30 in tank 25 (see figure 3a). Bubbles 37 are drawn at the left hand side, to indicate that the jet is provided at this side. However, it is not excluded that bubbles are formed over a larger area of the channel of the gas-dispersing device 35. After this step, the aeration process for cleaning the surface of submerged membrane 20 may be continued with providing no gas flow to the first inlet and providing no gas flow to the second inlet, during an interval (third interval) of between about 1 and 600 seconds, e.g. about 20 seconds. Subsequently, after this step, the aeration process for cleaning the surface of submerged membrane 20 may be continued with providing to second inlet 39 during a second interval up to about 500 cycles or pulses, e.g. 2 cycles or pulses, with a first period of e.g. about 20 seconds (gas flow pulse) and with a second period of e.g. about 20 seconds, thereby providing no gas flow to the first inlet, a jet may be provided closest to inlet 39 escaping from the gas-dispersing device 35, thereby providing a wave 70 on the surface of liquid 30 in tank 25 (see figure 3b). Bubbles 37 are drawn at the right hand side, to indicate that the jet is provided at this side. After this step, the aeration process for cleaning the surface of submerged membrane 20 may be continued with providing no gas flow to first inlet 36 and providing no gas flow to second inlet 39, during an interval (third interval) between about 1 and 600 seconds, e.g. about 20 seconds. Hence, there is a third interval with no gas flow after the first interval and after the second interval. During membrane filtration, these steps may be repeated, such that the first, second and third interval are repeated alternatingly, and wherein these intervals do not coincide.

Good results were obtained with a plate type membrane, with two modules above each other, forming one module 20, and with a biomass concentration in liquid 30 of about 12 gram/l. An air flow of about 0.12 Nm³/h/m² was used. The first and second period, the number of cycles, and the time of the third interval were as mentioned above. A 20 second pulse/jet at 36 was provided (first period), followed by a delay of 20 second (second period). This was repeated 10 times. After this first interval, this scheme was repeated at 39 (second interval). These intervals were repeated. Wave formation 70 with waves of about 5-10 cm height, over about 60 % over the module, from each side was observed. A flush was provided through 62 once a day. No sign of sludging was seen up to 25 gram/l biomass. DO (dissolved oxygen of the liquid in tank 25 was reduced from state of the art values of 5-6 mg/l O₂ to about 0.5-3 mg/l O₂, which aided the denitrification process accordingly. Control equipment (state of the art) at continuous flow yielded massive sludging at the sides of the membrane module and reduced the membrane surface by 50%. No visual fouling was observed, whereas under the same conditions using state of the art aeration systems, fouling was observed. A reduction in energy may be obtained of about 70 % with respect to state of the art aeration systems.

In a variation on this embodiment, the first and second intervals may coincide completely, and a process according to the invention may be used wherein the first/second interval are alternated with the third interval. In this embodiment, the wave may be generated simultaneously at both sides of the membrane (combination of figures 3a and 3b).

The membrane units 20 may have one or more headers (not shown) in fluid communication with a permeate side of one or more membranes which are comprised in membrane unit 20. The membranes in the membrane unit 20 may have a pore size in the micro filtration or ultra filtration range, e.g. between 0.003 and 10 µm. Membrane units 20 are available in various sizes and configurations with various header configurations. For example, the membranes comprised in membrane unit 20 may be hollow fibres potted in one or more headers (not shown) such that the lumens of the hollow fibres are in fluid communication with one or more headers. The headers may be of any convenient shape but typically have a rectangular or round face where they attach to the membranes comprised in membrane unit 20. Alternatively, the membranes 6 may be flat sheets which are typically oriented vertically in a spaced apart pair with headers on all four sides in fluid communication with the resulting interior surface. A membrane module 20 may have one or more micro filtration or ultra filtration membranes and many membrane modules may be joined together to form larger membrane modules, or cassettes, but all such configurations will be referred to as membrane units 20. Such membrane units are known in the art.

The process and gas flow system of the invention advantageously provide an efficient and effective cleaning of the membranes and facilitate better filtration and/or biological performance of the system. Further, membranes of the art that used to be cleaned by back washing, have to be back washed less frequently and with less intensity, when the process of the invention is applied. In some cases, back washing may even be redundant.

### Embodiment 2

This embodiment describes a membrane filtration tank 25, for use of one or more submerged filtration membranes, as schematically depicted in figure 4. The submerged filtration membranes are not shown, but only the gas-dispersing devices 35 are shown (as a kind of view from the bottom of tank 25). The gas flow system for cleaning the one or more filtration membranes according to the invention comprises a number of gas-dispersing devices 35 (in the figure 4 gas-dispersing devices are depicted, but more may be present), each gas-dispersing device comprising a channel with a number of apertures (not drawn in this detail) and the channel comprising a first inlet 36 and a second inlet 39. The aerators 35 will be arranged relative to the (not depicted) filtration membranes surfaces as described above. Further, this embodiment comprises a supply for the gas 40 connected by a first the tube 50 to first inlets 36 and connected by second tube 60 to second inlets 39 of the aerators or gas-dispersing devices 35. Tubes 50 and 60 may comprise valves 51 and 61, respectively, in order to enable the pulsed gas flow schemes as described above, but now at the same time to a number of aerators 35. The supply for the gas 40 may be connected by first tube 50 and second tube 60 to the gas-dispersing devices 35 in series or parallel. In figure 4, the gas-dispersing devices 35 are connected in series, with tubes 50 and 60 being connected to a position between the gas-dispersing devices 35(2) and 35(3) (i.e. in the middle of the number of gas-dispersing devices 35). Other positions may also be possible. Tubes 50 and 60 can be mounted in any position between the gas-dispersing devices 35. The same applies for flush valve 62, which is connected in figure 4 to tube 60, but which may also be connected to tube 50 (more than one flush valve 62 may be present, e.g. a flush valve 62 in both tubes 50 and 60).

### Embodiment 3

This embodiment describes aeration schemes for stand-by operation and flush operation. If the process mode is not required, but the system remains stand-by ("sleep") the same scheme as mentioned above may be applied, but providing no gas flow to the first inlet and providing no gas flow to the second inlet, during an interval (third interval) of 0.05 and 60 minutes, preferably about 5-60 minutes during a stand-by mode. In the flush mode, referring to figures 3a, 3b and 4, periodically, e.g. once or twice a day, valve 51 is open, valve 62 is open and valve 61 is closed. This may be done for a period of e.g. about 20-600 seconds, thereby purging sludge and solid material present and accumulated in gas-dispersing device 35 out from this system through flush valve 62.

### Embodiment 4

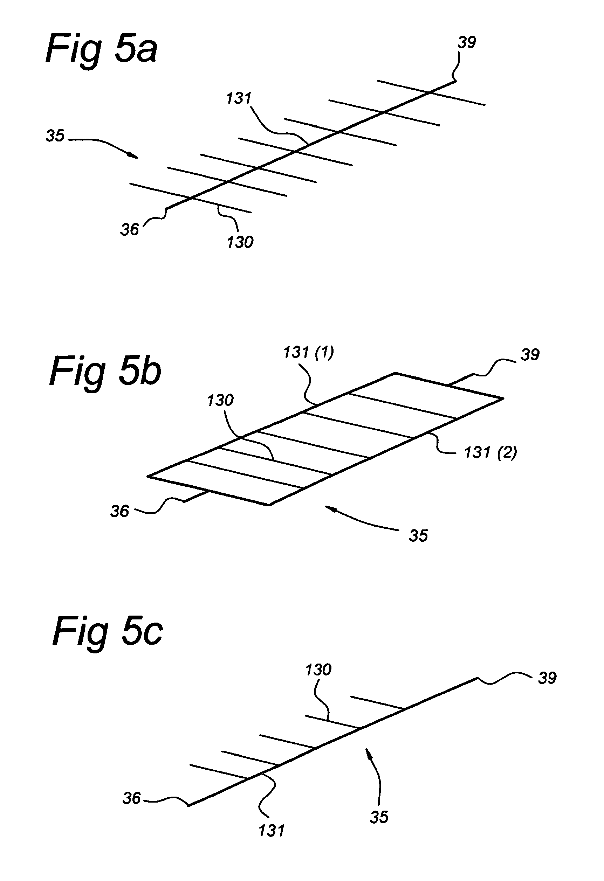

This embodiment describes in general gas-dispersing device 35 of the prior art, but with at least a first inlet 36 and a second inlet 39. The invention is not limited to the use of the gas-dispersing devices 35 which are schematically depicted in figures 5a-5c.

Each gas-dispersing device 35 in figure 5 has a first inlet 36 and a second inlet 39 and a main tube 131 (figures 5a and 5c) or 2 main tubes 131(1) and 131(2) (figure 5b). More main tubes 131 may be present. In the embodiments shown in figures 5a-c, each gas-dispersing device 35 further comprised branches or channels 130, like a Christmas tree (fig. 5a), like a ladder (fig. 5b) or a comb (fig. 5c). Each such branch 130 may comprises a number of holes or apertures (not shown in this figure), e.g. 5-100 apertures with diameters of e.g. 1-20 mm. The apertures may be distributed over the circumferential surface of channel 130, and may have the same dimensions or a distribution of dimensions. By way of example, each opposite branch 130 in figure 5a may be provided with 5-20 apertures of e.g. 8-12 mm. In another example, each branch or channel 130 may be provided with 20-40 apertures of 3-4 mm. The number of apertures and their diameters may differ, depending upon the commercial provider.

Herein, the distance of a channel 130 closest to inlet 36 and a channel 130 closest to inlet 39 is at least about 50-80 % of the length of the gas-dispersing device and/or of the length of the membrane module, (such that the above described distance is obtained).

The description above is intended to be illustrative, not limiting. Thus, it will be apparent to one skilled in the art that modifications may be made to the invention as described without departing from the scope of the claims set out below. The drawings usually only comprise the important elements and features that are necessary to understand the invention. Beyond that, the drawings are schematically and not on scale. The invention is not limited to those elements, shown in the schematic drawings since more elements may be present, as will be known to the person skilled in the art. For example, the tank for use of one or more submerged filtration membranes may further comprise an inlet for the liquid to be treated, a pump to pump away the permeate from the membrane (units), a drain valve, etc., as will be known to the person skilled in the art.

## Claims

1. A process for cleaning a submerged filtration membrane (20) in a tank (25) containing a liquid (30), comprising:
a) providing a gas-dispersing device (35), the gas-dispersing device (35) being arranged below at least part of the filtration membrane surface, the gas-dispersing device (35) comprising a channel, the channel comprising a circumferential wall with a number of apertures and the gas-dispersing device (35) comprising at least a first inlet (36) and a second inlet (39);
b) providing a pulsed gas flow to the first inlet (36), or to the second inlet (39) or to both first and second inlets (36, 39) of the gas-dispersing device (35), the pulsed gas flow comprising at least a first period wherein the gas flow is provided and at least a second period wherein no gas flow is provided, **characterized in that** the pulsed gas flow is provided to the first inlet (36) during a first interval and to the second inlet (39) during a second interval.

2. The process according to claim 1, wherein after the first interval or after the second interval or after both first and second intervals a third interval is provided wherein no gas flow is provided to the gas-dispersing device.

3. The process according to one of claims 1 and 2, wherein a gas flow of 0.01-0.3 Nm³/h/m², with respect to the area of the membrane, is provided.

4. The process according to one of claims 1-3, wherein the pulsed gas flow provides a wave (70) on the surface of the liquid in the tank (25).

5. A gas flow system for cleaning a submerged filtration membrane (20) comprising:
a) a gas-dispersing device (35), the gas-dispersing device comprising a channel, the channel comprising a circumferential wall with a number of apertures and the gas-dispersing device (35) comprising at least a first inlet (36) and a second inlet (3 9);
b) a supply (40) for the gas, the supply (40) connected by a first tube (50) to the first inlet (36) and connected by a second tube (60) to the second inlet (39), **characterized in that** the first tube (50) and the second tube (60) contain valves (51, 61).

6. The gas flow system according to claim 5, wherein the first inlet (36) and the second inlet (39) are arranged on opposite sides of the gas-dispersing device (35).

7. The gas flow system according to one of claims 5 and 6, further comprising a flush valve (62), connected with the first tube (50) or with the second tube (60).

8. A membrane filtration tank (25), comprising one or more submerged filtration membranes (35) and a gas flow system for cleaning the one or more filtration membranes (20), wherein the gas flow system comprises:
a) one or more gas-dispersing devices (35), each gas-dispersing device comprising a channel, the channel comprising a circumferential wall with a number of apertures and the gas-dispersing device (35) comprising at least a first inlet (36) and a second inlet (39), the one or more gas-dispersing devices (35) for providing a gas in the liquid being arranged below at least part of the one or more filtration membranes surfaces;
b) a supply (40) for the gas connected by a first tube (50) to the one or more first inlets (36) and connected by a second tube (60) to the one or more second inlets (39) of the one or more gas-dispersing devices (35), **characterized in that** the first tube (50) and the second tube (60) contain valves (51, 61).

9. The membrane filtration tank (25) according to claim 8, wherein the first inlet (36) and the second inlet (39) are arranged on opposite sides of the gas-dispersing device (35).

10. The membrane filtration tank (25) according to one of claims 8 and 9, further comprising a flush valve (62), connected with the first tube (50) or with the second tube (60).

11. A computer program product comprising computer executable instructions which, when loaded on a computer which interfaces with a gas flow system according to one of claims 5-7, provides the combination of computer and gas flow system with the functionality of the process according to one of claims 1-4.

## Patentansprüche

1. Verfahren zur Reinigung einer Tauch-Filtrationsmembran (20) in einem Behälter (25), der eine Flüssigkeit (30) enthält, umfassend:
a) Bereitstellen einer Gasdispergiervorrichtung (35), wobei die Gasdispergiervorrichtung (35) unterhalb zumindest eines Teils der Oberfläche der Filtrationsmembran angeordnet ist, und die Gasdispergiervorrichtung (35) einen Kanal umfasst, wobei der Kanal eine umlaufende Wand mit einer Anzahl von Öffnungen umfasst und die Gasdispergiervorrichtung (35) zumindest einen ersten Einlass (36) und einen zweiten Einlass (39) umfasst;
b) Bereitstellen eines gepulsten Gasstroms an den ersten Einlass (36) oder den zweiten Einlass (39) oder sowohl an den ersten als auch den zweiten Einlass (36, 39) der Gasdispergiervorrichtung (35), wobei der pulsierende Gasstrom zumindest eine erste Periode umfasst, in der der Gasstrom bereitgestellt wird, und zumindest eine zweite Periode, in der kein Gasstrom bereitgestellt wird, **dadurch gekennzeichnet, dass** der gepulste Gasstrom am ersten Einlass (36) während eines ersten Intervalls und am zweiten Einlass (39) während eines zweiten Intervalls bereitgestellt wird.

2. Verfahren gemäß Anspruch 1, wobei nach dem ersten Intervall oder nach dem zweiten Intervall oder nach sowohl dem ersten als auch dem zweiten Intervall ein drittes Intervall bereitgestellt wird, in dem kein Gasstrom an die Gasdispergiervorrichtung bereitgestellt wird.

3. Verfahren gemäß einem der Ansprüche 1 oder 2, wobei ein Gasstrom von 0,01 bis 0,3 Nm³/h/m² in Bezug auf die Fläche der Membran bereitgestellt wird.

4. Verfahren gemäß einem der Ansprüche 1 bis 3, wobei der gepulste Gasstrom eine Welle (70) auf der Oberfläche der Flüssigkeit im Behälter (25) bereitstellt.

5. Gasströmungssystem zur Reinigung einer Tauch-Filtrationsmembran (20), umfassend:
a) eine Gasdispergiervorrichtung (35), wobei die Gasdispergiervorrichtung einen Kanal umfasst, wobei der Kanal eine umgebende Wand mit einer Anzahl von Öffnungen umfasst und die Gasdispergiervorrichtung (35) zumindest einen ersten Einlass (36) und einen zweiten Einlass (39) umfasst;
b) eine Versorgung (40) für das Gas, wobei die Versorgung (40) über ein erstes Rohr (50) mit dem ersten Einlass (36) verbunden ist und über ein zweites Rohr (60) mit dem zweiten Einlass (39) verbunden ist, **dadurch gekennzeichnet, dass** das erste Rohr (50) und das zweite Rohr (60) Ventile (51, 61) enthalten.

6. Gasströmungssystem gemäß Anspruch 5, wobei der erste Einlass (36) und der zweite Einlass (39) an gegenüberliegenden Seiten der Gasdispergiervorrichtung (35) angeordnet sind.

7. Gasströmungssystem gemäß einem der Ansprüche 5 oder 6, weiterhin umfassend ein Spülventil (62), das mit dem ersten Rohr (50) oder mit dem zweiten Rohr (60) verbunden ist.

8. Membranfiltrationsbehälter (25), umfassend eine oder mehrere Tauch-Filtrationsmembrane (35) und ein Gasströmungssystem zur Reinigung der einen oder mehreren Filtrationsmembrane (20), wobei das Gasströmungssystem umfasst:
a) eine oder mehrere Gasdispergiervorrichtungen (35), wobei jede Gasdispergiervorrichtung einen Kanal umfasst, wobei der Kanal eine umgebende Wand mit einer Anzahl von Öffnungen umfasst und die Gasdispergiervorrichtung (35) zumindest einen ersten Einlass (36) und einen zweiten Einlass (39) umfasst, wobei die eine oder mehreren Gasdispergiervorrichtungen (35) zur Bereitstellung eines Gases in der Flüssigkeit unterhalb zumindest eines Teils der einen oder mehreren Oberflächen der Filtrationsmembrane angeordnet sind;
b) eine Versorgung (40) für das Gas, die über ein erstes Rohr (50) mit den ein oder mehreren ersten Einlässen (36) verbunden ist und über ein zweites Rohr (60) mit den ein oder mehreren zweiten Einlässen (39) der einen oder mehreren Gasdispergiervorrichtungen (35) verbunden ist, **dadurch gekennzeichnet, dass** das erste Rohr (50) und das zweite Rohr (60) Ventile (51, 61) enthalten.

9. Membranfiltrationsbehälter (25) gemäß Anspruch 8, wobei der erste Einlass (36) und der zweite Einlass (39) an gegenüberliegenden Seiten der Gasdispergiervorrichtung (35) angeordnet sind.

10. Membranfiltrationsbehälter (25) gemäß Anspruch 8 oder 9, weiterhin umfassend ein Spülventil (62), das mit dem ersten Rohr (50) oder mit dem zweiten Rohr (60) verbunden ist.

11. Computerprogrammprodukt umfassend computerausführbare Instruktionen, das, wenn es auf einen Computer geladen ist, der mit einem Gasströmungssystem gemäß einem der Ansprüche 5 bis 7 verbunden ist, die Verbindung des Computers und des Gasströmungssystems mit der Funktionalität des Verfahrens gemäß einem der Ansprüche 1 bis 4 bereitstellt.

## Revendications

1. Procédé pour le nettoyage d'une membrane filtrante immergée (20) dans un réservoir (25) contenant un liquide (30), comprenant :
a) la fourniture d'un dispositif de dispersion de gaz (35), ledit dispositif de dispersion de gaz (35) étant agencé en dessous d'au moins une partie de la surface de membrane filtrante, ledit dispositif de dispersion de gaz (35) comprenant un canal, ledit canal comprenant une paroi circonférentielle avec plusieurs ouvertures et le dispositif de dispersion de gaz (35) comprenant au moins une première entrée (36) et une seconde entrée (39) ;
b) l'introduction d'un flux de gaz pulsé dans la première entrée (36), ou dans la seconde entrée (39) ou à la fois dans la première et la seconde entrées (36, 39) du dispositif de dispersion de gaz (35), le flux de gaz pulsé comprenant au moins une première période dans laquelle le flux de gaz est fourni et au moins une seconde période dans laquelle aucun flux de gaz n'est fourni, **caractérisé en ce que** le flux de gaz pulsé est introduit dans la première entrée (36) pendant un premier intervalle et dans la seconde entrée (39) pendant un second intervalle.

2. Procédé selon la revendication 1, dans lequel après le premier intervalle ou après le second intervalle ou après le premier et le second intervalles, un troisième intervalle est prévu dans lequel aucun flux de gaz n'est introduit dans le dispositif de dispersion de gaz.

3. Procédé selon la revendication 1 ou 2, dans lequel un flux de gaz de 0,01 à 0,3 Nm³/h/m², par rapport à la surface de la membrane, est assuré.

4. Procédé selon la revendication 1 à 3, dans lequel le flux de gaz pulsé offre une onde (70) sur la surface du liquide dans le réservoir (25).

5. Système de flux de gaz pour le nettoyage d'une membrane filtrante immergée (20) comprenant :
a) un dispositif de dispersion de gaz (35), ledit dispositif de dispersion de gaz comprenant un canal, le canal comprenant une paroi circonférentielle avec plusieurs ouvertures et ledit dispositif de dispersion de gaz (35) comprenant au moins une première entrée (36) et une seconde entrée (39) ;
b) une alimentation (40) pour le gaz, l'alimentation (40) étant raccordée par un premier tube (50) à la première entrée (36) et raccordée par un second tube (60) à la seconde entrée (39), **caractérisé en ce que** le premier tube (50) et le second tube (60) contiennent des valves (51, 61).

6. Système de flux de gaz selon la revendication 5, dans lequel la première entrée (36) et la seconde entrée (39) sont agencées sur des côtés opposés du dispositif de dispersion de gaz (35).

7. Système de flux de gaz selon la revendication 5 ou 6, comprenant également une valve d'évacuation (62) raccordée avec le premier tube (50) ou avec le second tube (60).

8. Réservoir de filtration à membrane (25) comprenant une ou plusieurs membranes filtrantes immergées (35) et un système de flux de gaz pour le nettoyage d'une ou de plusieurs membranes filtrantes (20), dans lequel le système de flux de gaz comprend :
a) la fourniture d'un ou de plusieurs dispositifs de dispersion de gaz (35), chaque dispositif de dispersion de gaz comprenant un canal, le canal comprenant une paroi circonférentielle avec plusieurs ouvertures et le dispositif de dispersion de gaz (35) comprenant au moins une première entrée (36) et une seconde entrée (39), lesdits un ou plusieurs dispositifs de dispersion de gaz (35) pour fournir un gaz dans le liquide étant agencés en dessous d'au moins une partie des surfaces desdites une ou plusieurs membranes filtrantes ;
b) une alimentation (40) pour le gaz raccordée par un premier tube (50) auxdites une ou plusieurs premières entrées (36) et raccordée par un second tube (60) auxdites une ou plusieurs secondes entrées (39) desdits un ou plusieurs dispositifs de dispersion de gaz (35), **caractérisé en ce que** le premier tube (50) et le second tube (60) contiennent des valves (51, 61).

9. Réservoir de filtrat de membrane (25) selon la revendication 8, dans lequel la première entrée (36) et la seconde entrée (39) sont agencées sur des côtés opposés du dispositif de dispersion de gaz (35).

10. Réservoir de filtrat de membrane (25) selon la revendication 8 ou 9, comprenant également une valve d'évacuation (62) raccordée au premier tube (50) ou au second tube (60).

11. Programme informatique comprenant des instructions exécutables par un ordinateur qui, quand il est chargé dans un ordinateur en interface avec un système de flux de gaz selon l'une quelconque des revendications 5 à 7, offre la combinaison d'un ordinateur et d'un système de flux de gaz avec la fonctionnalité du procédé selon l'une quelconque des revendications 1 à 4.
